# EUROPEAN PATENT APPLICATION

(11) **EP 1 382 371 A2**
(43) Date of publication of application: **21.01.2004**
(21) Application number: 03291201.6
(22) Date of filing: 21.05.2003
(51) Int. Cl.: A63F 13/10

(54) **Game control system and method**

(30) Priority: 21.05.2002 US 382124 P
(71) Applicant: Midway Amusement Games, LLC, Chicago, Illinois 60618 (US)
(72) Inventor: Boon, Edward J., Arlington Heights, Illinois 60004 (US)
(74) Representative: Loisel, Bertrand

(57) **Abstract**

A video game control system and method is provided in which participants in a game may change control modes during game play to result in beneficial combinations of moves during a game. Participants are given the opportunity to specialize in specific control modes, and the control modes may correspond to specific martial arts whose styles are used by characters during the play of the game. Further, control styles may be altered while carrying out combinations or strings of moves such that particularly effective attacks and defenses may be employed by game participants.

## Description

### FIELD OF THE INVENTION

The present invention relates generally to amusement games, and more particularly relates to an enhanced control system for video games.

### BACKGROUND OF THE INVENTION

For years, electronic games have been a popular and growing segment of the entertainment industry. Such games may be played using specialized gaming machines of the type found at video arcades and taverns, on computers, or on home gaming systems. Generally, the player interacts with the game via a controller, which sends signals to a central game processor or controller processor, with the effects of the player's interactions with the controller being shown on a display, often with audio accompaniment pertaining to the player's movements.

The video game industry has developed several styles or "genres" of video game. Strategy games, shooting games, flying games, and driving games are all examples of popular genres. One particularly popular genre in recent years is the fighting game genre, which generally involves two or more competitors battling in a video game world using hand-to-hand combat. Fighting game players generally use a variety of attacks and defenses to overcome their opponents. Some fighting games incorporate magical attacks and weapons to increase the excitement of a simulated fight.

Given the extreme popularity of fighting games, game developers and publishers have created dozens of different styles of fighting games, because success in the video game industry is highly dependent upon incorporating gameplay features and audio and graphical touches that are not found in competitors' products. In addition, many game developers have duplicated successful features of other games, such that there is an increasing sense among players of fighting games that several features have become standard, or "stale." Because there is a constant desire among video game players to experience new game elements, it is important to offer players alternative methods for interacting with video games.

### SUMMARY OF THE INVENTION

A game control system is provided which allows the player to switch control modes during the game.

According to one embodiment of the present invention, a fighting game is provided which allows the player to quickly switch between two different control modes, with the control mode switch bringing about a corresponding alteration in the fighting controls of a fighting game character.

According to another embodiment of the present invention, a fighting game control system is provided which allows a player to perform a continuous sequence of moves including moves from several discrete fighting styles, with the fighting style and corresponding control mode being altered by the player.

The above summary of the present invention is not intended to represent each embodiment, or every aspect, of the present invention. This is the purpose of the figures and the detailed description which follow.

### BRIEF DESCRIPTION OF THE DRAWINGS

The foregoing and other advantages of the invention will become apparent upon reading the following detailed description and upon reference to the drawings.
FIG. 1 is a screen view of a fighting game according to one embodiment of the present invention.
FIG. 2 is a functional block diagram of a game system according to one embodiment of the present invention.
FIG. 3 is an isometric view of a game system according to one embodiment of the present invention.
FIG. 4 is a flow chart showing the process of game control according to one embodiment of the present invention.
FIG. 5 is a flow chart showing game control modes according to one embodiment of the present invention.
FIG. 6 is a flow chart showing a control mode transfer according to one embodiment of the present invention.
FIG. 7 is a flow chart showing the process of a combination or string of moves according to one embodiment of the present invention.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DESCRIPTION OF ILLUSTRATIVE EMBODIMENTS

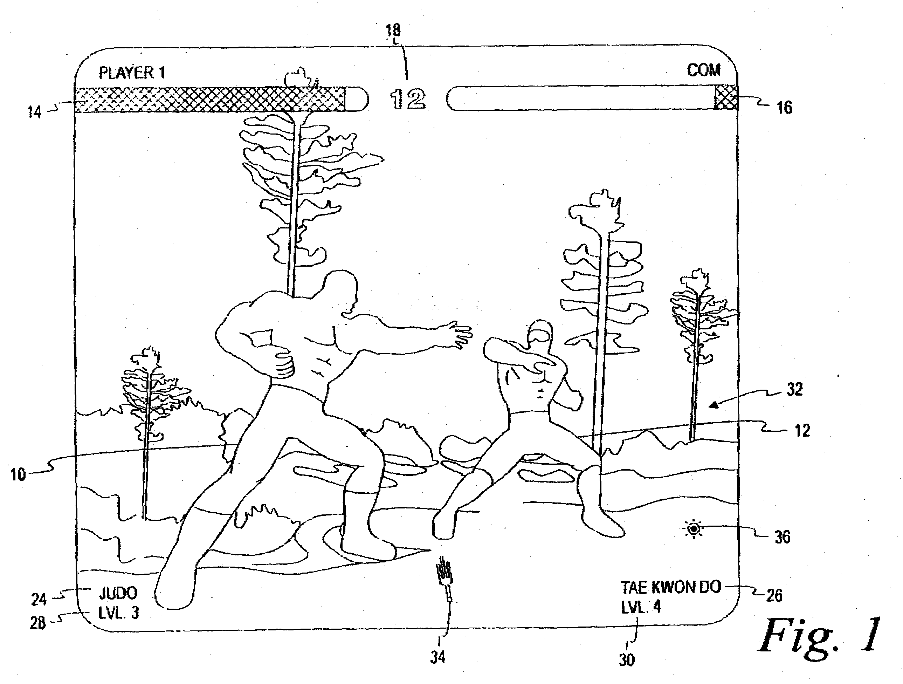

The game control system of the present invention allows for increased versatility of controls by the user by allowing the use of multiple control modes within a single game. The game control system of the present invention may be employed in a variety of game settings, such as in arcade games, computer games, home console video games, and the like. A screen display of one embodiment of a game employing the game control system of the present invention is shown in FIG. 1. Though the game control system of the present invention will be described with respect to a fighting game, it is to be understood that the present invention may be applied to various game genres, including adventure games, role-playing games, sports games, and the like.

As shown in FIG. 1, a fighting game generally allows players to battle other players or computer controlled opponents in simulated combat. Simulated combat generally involves employing a variety of moves in an attempt to defeat an opponent. Moves include punches, kicks, blocks, throws, and special moves such as magical attacks. In FIG. 1, a first fighter 10 is shown attacking a second fighter 12, who is blocking. First and second energy meters 14 and 16 show the amount of energy left for each fighter, with the fight ending when one player has no remaining energy. Alternatively, a fight may end when a timer 18 drops to zero, with the player having more energy at that time winning the battle. First and second player name indicators 20 and 22 are also shown, indicating that the first fighter 10 is controlled by a player and the second fighter 12 is controlled by the computer. Fighting games according to the present invention may allow a player to select from several different characters and fighting styles.

In the fighting game embodiment of FIG. 1, the first and second fighters 10 and 12 may employ different fighting styles as a battle progresses. The fighting styles selected by the player and computer in FIG. 1 are shown by first and second control mode indicators 24 and 26. Further, players may attain different levels in different fighting styles, and these levels are shown by first and second level indicators 28 and 30. The control mode and level indicators of FIG. 1 show that the first fighter is employing a judo fighting style, and has attained level 3 in that style, and that the second fighter is employing a tae kwon do fighting style and has attained level 4 in that style.

As the battle shown in FIG. 1 progresses, the game control system of the present invention will allow the player and the computer to switch fighting styles in order to gain advantages over their opponents. As the fighting styles are changed, the control mode indicators 24 and 26 are changed to indicate the chosen fighting style, and the level indicators 28 and 30 are changed to show the players' levels of proficiency in the various fighting styles. In addition to hand-to-hand combat, objects from the fighting stage may be incorporated into the battle. Weapons 34 and power-ups 36 may be incorporated into battles, as discussed further below.

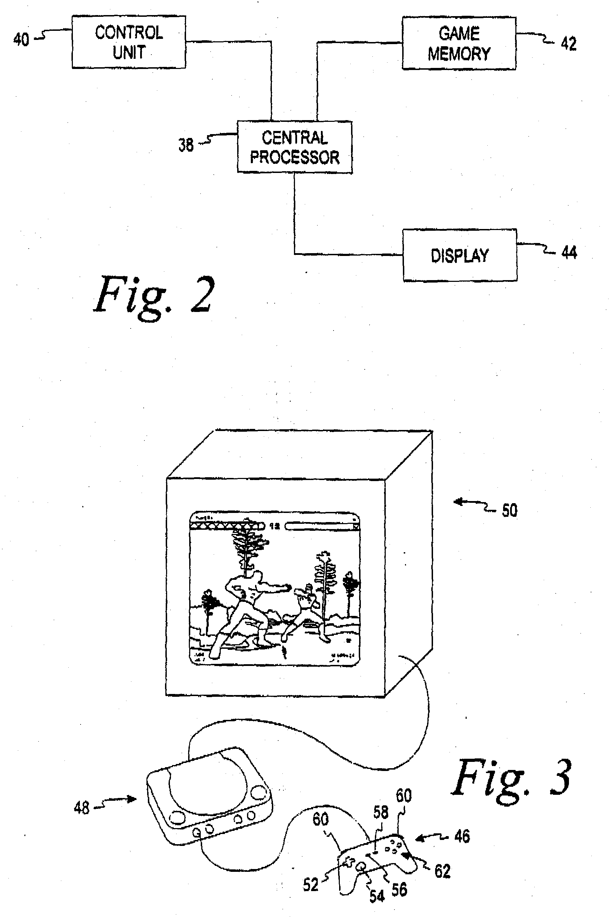

The display of gameplay shown in FIG. 1 is controlled by game hardware. Turning now to FIG. 2, a block diagram showing data flow using game hardware according to one embodiment of the present invention is shown. General game activities are controlled by a central processor 38. Game information may be processed by a game processor, which may incorporate several sub-processors dedicated to control and display signals. Players' activities affecting the gameplay are input into the game system via a control unit 40. A control unit 40 may be a joystick, joypad, trac-ball, steering wheel, button set, keyboard, or any other type of input device or combination of input devices. Control input signals indicating a player's desired game actions or moves are sent from the control unit 40 to the central processor 38, which accepts the input signals and alters gameplay accordingly.

Game information is stored in the game memory 42 and accessed as needed by the central processor 38 for the correct performance of game activities. Game memory according to the present invention may be optical, electronic, or other types of memory. According to one embodiment of the present invention, the game memory 42 is a combination of DVD-ROM and electronic RAM. The outcomes of game activities are shown on a display 44. Additional hardware may be incorporated into a game system according to the present invention. For example, separate sub-processors may be used to assist in the control and display of game activities. According to one embodiment, a video processor (not shown) processes game display information and interacts with the display 44 to improve the graphical quality of the game experience.

Turning now to FIG. 3, an isometric view of game hardware according to one embodiment of the present invention is shown. A control pad 46 serves as the control unit through which the player interacts with a game console 48. The game console contains the central processor 38, and is connected to a video display 50 which performs the functions of the display 44. The control pad 46 includes a digital pad 52, an analog pad 54, a select button 56, a start button 58, shoulder buttons 60, and face buttons 62. In the embodiment of FIG. 3, manipulation of these controls by the player causes control signals to be sent to the game console 48, which sends display signals to the video display 50 giving visual feedback of the player's input to the player.

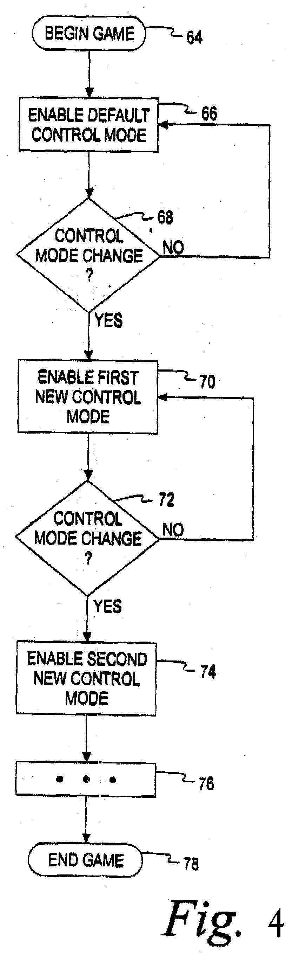

Turning now to FIG. 4, a flow chart shows the progression of game logic to enable the use of multiple control modes according to one embodiment of the present invention. Control modes of the present invention may take a variety of forms. In one embodiment of the present invention, control modes take the form of move sets, which allow selections of actions performed by game characters in response to control inputs from a player. For example, in the embodiment shown in FIG. 1, the control modes take the form of the judo and tae kwon do fighting styles displayed by the control mode indicators 24 and 26. When using the judo control mode, a player's selection of possible game actions are consistent with actions performed in the judo fighting style. Similarly, a player operating under a tae kwon do control mode will be able to perform game actions consistent with the fighting style of tae kwon do.

This progression may be carried out by the interaction of hardware as shown in FIG. 2. As shown at block 64, game play begins with a "begin game" instruction. This instruction may take the form of a player hitting the start button 58 on the control pad 46 in a home game embodiment, or it may take the form of an inserted credit in an arcade game embodiment. At this point, the game control system of the present invention enables a default control mode as shown at block 66. A default control mode in a fighting game according to the present invention may include a variety of punches, kicks, and throws common to all characters in the fighting game. Alternatively, the default control mode may include basic moves that are specific to individual characters.

A player is given the opportunity to change the control mode from the default control mode to an alternative control mode. According to one embodiment of the present invention, a player may change control modes at any time during game play. According to another embodiment, a player may change control modes only at specific times. For example, it may be possible for a player to change control modes only after sustaining or inflicting a certain amount of damage, or to change control modes only at time windows specified during the game. During the times when control mode change is possible, the central processor 38 or a separate control processor (not shown) monitors inputs from the control unit 40 to detect input that indicates the player wishes to change the control mode. Inputs to change the control mode may include specific button presses or sequences of button presses, movements of a digital or analog pad, or a combination of these and other input techniques.

This monitoring of the input for an indication of a control mode change is shown at decision block 68. If no input indicating a control mode change is received, the gameplay proceeds in the default control mode. If input indicating a control mode change is received, a first new control mode is enabled as shown at block 70. Again, inputs are monitored for an indication of a control mode change, as shown at decision block 72. As long as no indications of control mode change are received, the gameplay will continue in the first new control mode. If an indication of a control mode change is received, a second new control mode is enabled as shown at block 74. As shown by iteration block 76, the process of monitoring and implementing control mode changes may proceed as long as gameplay proceeds, and until the game ends as shown at block 78. Using the control system of the present invention, it is possible to allow return to a default control mode or to some intermediately selected control mode as the game progresses.

In the fighting game embodiment of the present invention shown in FIG. 1, as the control modes are changed the player is allowed access to alternative move sets. According to one embodiment of the present invention, a move set is a group of move outcomes which occur in response to specific inputs from a player. Alteration of move sets allows a player increased versatility during gameplay, thereby increasing the level of interaction between a player and a game. A default move set may include a selection of fighting moves, such as punches, kicks, and throws. The selection of a new control mode may allow a player or a computer opponent to access more specialized or broader sets of controls. For example, individual control modes in a fighting game may include control modes corresponding to specific martial arts, such as karate, tae kwon do, and judo. Control modes may also include move-specific control modes, such as modes in which every move is a different type of kick, punch, throw, counterattack, reversal, or a special move. Further, control modes may include specialized offensive or defensive control modes. Control modes may be specific to individual characters, may apply to all characters, or may be transferred between characters as gameplay progresses.

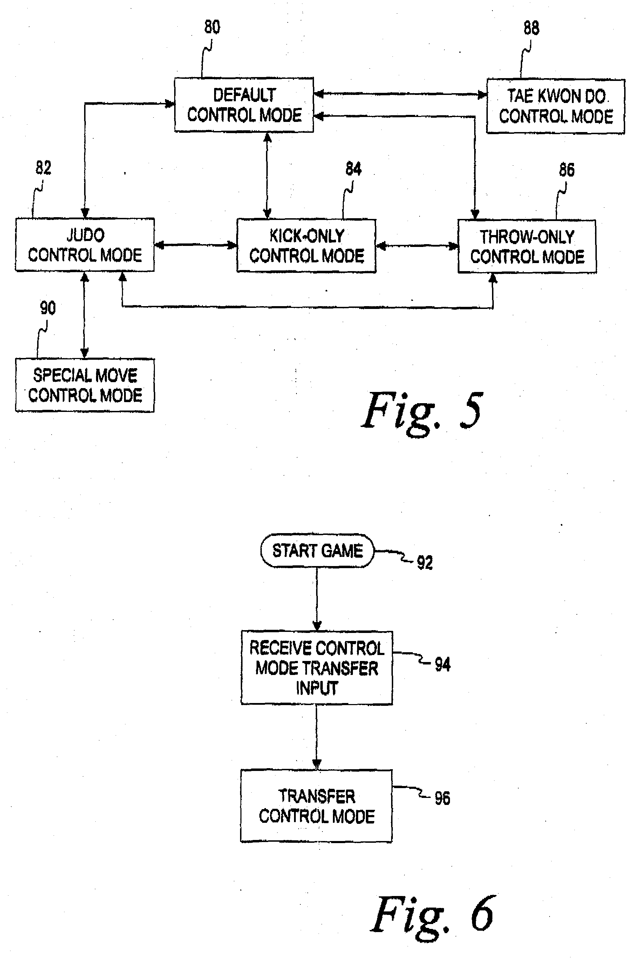

Turning now to FIG. 5, a block diagram is shown demonstrating the available alteration of control modes during gameplay according to one fighting game embodiment of the present invention. In the embodiment shown in FIG. 5, alteration of control modes during gameplay allows a game participant, such as a player or a game processor, to adopt new move sets during a battle. As shown at block 80, a default control mode may be available to every character in a game and serves as a basic control mode including a variety of basic fighting commands such as punches, kicks, and throws. A variety of other control modes may be entered into from the default control mode, as shown by the arrows of FIG. 5. In the embodiment of FIG. 5, a game participant may choose to enter a judo control mode, as shown at block 82, a kick-only control mode as shown at block 84, or a throw-only control mode as shown at block 86. Further, once operating under certain control modes, a participant may be given the opportunity to switch from the individual control modes to other control modes. For example, as shown in FIG. 5, a participant who is operating under the judo control mode may transfer to the default control mode, the kick-only control mode, or to the throw-only control mode.

Further, certain control modes may be segregated without allowing the ability to enter specific other control modes. An example of this is shown at block 88, which shows a tae kwon do control mode which can be accessed only from the default control mode and which only allows access back toward the default control mode. Further, certain control modes may only be accessed through individual separate control modes. An example of such a control mode is shown at block 90, which shows a special control mode 90 which is accessible only once a player has entered the judo control mode at block 82, and which only allows return to the judo control mode. These various types of control modes can be combined in a number of ways based on the design goals of particular games. Further, while the alteration of control modes has been illustrated with respect to fighting styles, it is to be understood that these principles can be expanded to cover other control modes for games such as strategy games, driving games, flying games, and the like.

In a fighting game application, a variety of control modes may be implemented using the principles of the present invention. In addition to the fighting style control modes discussed above, the present invention may be used to allow a player to select, in real time and during game play, from the following types of control modes:
**defensive control mode:** concentrates on defensive moves such as blocks and dodging moves, with a corresponding decrease in offensive ability;
**offensive control mode:** concentrates on offensive moves such as punches, kicks, magical, and weapon attacks, with a corresponding decrease in defensive ability;
special attack control mode: concentrates on special attacks, such as magical and weapons-based attacks, with a corresponding decrease in other offensive and defensive abilities;
**counterattack control mode:** concentrates on moves which allow a player to take the advantage from an attacking opponent by dodging or deflecting and rapidly attacking the opponent;
**reversal control mode:** concentrates on moves which allow a player to utilize the motion of an opponent's attack to throw the opponent or otherwise effectively turn the opponent's move against the opponent; and
**weapon-specific control mode:** a control mode that is linked to the use of a particular weapon and utilizes moves which best make use of the particular weapon.

The implementation of control modes according to the present invention allows for innovative game events and strategies. For example, as shown in block diagram format in FIG. 6, the control modes of the present invention may allow a player or computer-controlled character to steal a control mode from an opponent during gameplay, or otherwise to effect transfer of control modes from one character to another. As shown at block 92, a control mode transfer may be enabled when the game is started. During the game, the player's inputs are monitored so that the game system can receive an input relating to a control mode transfer, as shown at block 94. The control mode transfer input may take the form of a set input such as a move or group of moves that will effect the transfer of a control mode. Alternatively a control mode transfer may be effected by the loss of a power-up 36 (shown in FIG. 1) from the transferred-from character and subsequent acquisition of the power-up 36 by the transferred-to character. Similarly, a control mode may be in effect only when a certain weapon 34 (shown in FIG. 1) is acquired by a character. Once the requirements for a control mode transfer are met, the control mode is transferred as shown at block 96, thereby giving the character the opportunity to adopt that control mode as discussed above. Control mode data may also be transferred between characters outside of gameplay, for example by swapping data between memory cards as used in game consoles, or by swapping data over the Internet or another network.

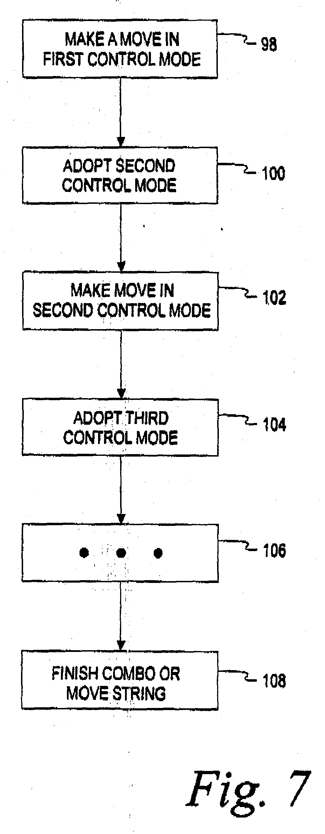

As shown in FIG. 7, the implementation of control modes according to the present invention further allows the use of fighting techniques involving combination moves or "strings" of moves into one fluid movement, with individual moves being implemented in different control modes. As shown at block 98, a combination ("combo") or string of moves is initiated when a player manipulates game inputs to make a move in a first control mode. To continue a combo or string of moves in another control mode, the player adopts a second control mode during or at the conclusion of the move, as shown at block 100. Next, the player makes a move in the second control mode as shown at block 102. To cause a combo or string of moves, the player may have to make moves very quickly or with specific timing in order to cause a fluid and continuous string of movements. The player may continue the combo into another control mode by adopting a third control mode as shown at block 104. The combo or string may be continued in this manner as shown by the iteration block 106 until the combo or string is finished as shown at block 108. The combo or string may be finished by terminating control inputs for a character, or by receiving a defensive or counterattack move from an opponent.

While the present invention has been described with reference to one or more particular embodiments, those skilled in the art will recognize that many changes may be made thereto without departing from the spirit and scope of the present invention. Each of these embodiments and obvious variations thereof is contemplated as falling within the spirit and scope of the claimed invention, which is set forth in the following claims.

## Claims

1. A video game control system for use in a gaming machine, **characterised by**:
a control unit (40) accepting control inputs from a player and generating control input signals;
a game processor (38) accepting said control input signals and outputting character movement signals; and
a display (44);
one or more of said control inputs comprising control mode change inputs, said game processor reacting to said control mode change inputs by changing a control mode of a corresponding character (10, 12).

2. The video game control system of claim 1, further comprising game memory (42) accessible by said game processor (38) and containing control mode information for two or more characters (10, 12).

3. The video game control system of claim 2, wherein said game memory (42) contains control mode data specific to individual ones of said two or more characters (10, 12).

4. The video game control system of claim 3, wherein certain ones of said control mode inputs comprise control mode transfer inputs, said game processor (38) reacting to said control mode transfer inputs by transferring control mode data from one character to another (10, 12).

5. The video game control system of claim 1, wherein certain ones of said control inputs comprise move string inputs, said game processor reacting to said move string inputs by causing a move string to be depicted on said display.

6. The video game control system of claim 1, wherein said game processor (38) is adapted to react to said control mode change inputs by changing the control mode of a corresponding character (10, 12) at any time during game play.

7. The video game control system of claim 1, wherein said game processor (38) is adapted to react to said control mode change inputs by changing the control mode of a corresponding character (10, 12) only at specific times during gameplay.

8. The video game control system of claim 1, wherein said control mode of said character is selected from a group of control modes, at least one of said control modes being a special control mode accessible only after a character (10, 12) has adopted a predetermined different control mode.

9. A method of presenting a video game for the video game control system of claim 1 **characterised by**:
providing a character having two or more control modes, said character being controllable by a player and operating in a first control mode;
accepting control inputs from a player, certain of said control inputs comprising control mode change inputs;
receiving a control mode change input;
causing said character to operate in a second control mode in response to said control mode change input, said second control mode causing said character to respond differently to said control inputs; and
providing a second character having two or more second character control modes, one or more of said second character control modes being transferable to said first character in response to a control mode transfer input.

10. The method of claim 9, wherein said control mode transfer input comprises a move or string of moves.

11. The method of claim 9, wherein said control mode transfer input comprises a control mode transfer move.

12. The method of claim 9, wherein said control mode transfer input comprises the acquisition of a power-up by a character.

13. The method of claim 9, wherein said control mode transfer input comprises the acquisition of a weapon by a character.

14. The method of claim 9, wherein said one or more of said second character control modes is transferable to said first character during uninterrupted gameplay of said video game.

15. A method of effecting character movement in a video game for the video game control system of claim 1 **characterised by**:
providing a character having a first control mode and a second control mode,
said first and second control modes enabling first and second move sets, respectively;
initially providing said character in said first control mode;
executing a first move from said first move set;
changing from said first control mode to said second control mode; and
stringing said first move from said first move set into a second move from said second control set such that a fluid movement is depicted from said first move to said second move.

16. The method of claim 9 or 15, wherein said first and second control modes are selected from the group comprised of an offensive control mode, a defensive control mode, a special attack control mode, a counterattack control mode, and a reversal control mode.

17. The method of claim 9 or 15, wherein at least one of said first and second control modes is a weapon-specific control mode.

18. The method of claim 17, wherein said weapon-specific control mode is associated with a transferable weapon, said move set related to said weapon-specific control mode transferring to a character depending on possession of said transferable weapon.

19. The method of claim 9 or 15, wherein at least one of said first and second control modes is a transferable control mode comprising transferable control mode data.

20. The method of claim 19, further comprising saving said control mode data on a memory card and transferring said control mode data via said memory card.

21. The method of claim 19, further comprising transferring said control mode data via the Internet.
